# EUROPÄISCHE PATENTSCHRIFT

(11) **EP 2 018 985 B1**
(45) Veröffentlichungstag und Bekanntmachung des Hinweises auf die Patenterteilung: **25.05.2011**
(21) Anmeldenummer: 08104857.1
(22) Anmeldetag: 24.07.2008
(51) Int. Cl.: B60H 1/00, B60H 1/32

(54) **Klimaanlage für ein Kraftfahrzeug sowie Verfahren zu deren Betrieb**
Air-conditioning system for a motor vehicle, and method for its operation
Climatisation pour véhicule automobile et procédé de contrôle correspondant

(30) Priorität: 26.07.2007 DE 102007034821
(43) Veröffentlichungstag der Anmeldung: 28.01.2009
(73) Patentinhaber: Ford Global Technologies, LLC, Dearborn, MI 48126 (US)
(72) Erfinder: Fischer, Dietmar, 50733 Köln (DE); Markowitz, Markus, 50668 Köln (DE)
(74) Vertreter: Dörfler, Thomas

(56) Entgegenhaltungen:
- EP-A1- 1 647 428
- EP-B1- 1 186 840
- WO-A1-2005/115776
- DE-C1- 19 935 269

## Beschreibung

Die Erfindung betrifft eine Klimaanlage für ein Kraftfahrzeug mit einem wenigstens aus einem Kompressor zum Komprimieren des Kühlmittels, einem Kondensator zum Abkühlen des komprimierten Kühlmittels, einer Expansionseinrichtung zur Druckreduzierung des Kühlmittels sowie einem Verdampfer zum Verdampfen des Kühlmittels gebildeten Kühlmittelkreislauf, sowie ein Verfahren zum Betrieb einer Klimaanlage.

Aus der EP 1 647 428 A1 ist eine Klimaanlage mit einem Kühlmittelkreislauf bekannt. Die Klimaanlage ermöglicht die Bereitstellung eines Kühlmediums mit einer niedrigen Temperatur, welches einem Wärmetauscher zugeführt wird und dort zur Kühlung von Umgebungsluft oder Innenraumluft eines Kraftfahrzeugs, die eine hohe Temperatur aufweist, eingesetzt wird. Die gekühlte Luft wird anschließend einem Innenraum des Kraftfahrzeugs zuführt, um dort eine Abkühlung, insbesondere eine Temperierung auf eine vorgebbare Zieltemperatur, zu ermöglichen.

Aus der EP 1 186 840 B1 ist ein Verfahren zur Ermittlung des Füllstandes einer Klimaanlage in einem Kraftfahrzeug bekannt, bei der der Druck im Kühlmittel vor bzw. nach der Expansionseinrichtung während einer konstanten Betriebsphase des Motors des Kraftfahrzeuges gemessen wird. Der gemessene Druck wird mit einem vorbestimmten Bezugswert verglichen und daraus auf den Füllstand des Kühlmittels geschlossen. Dieses Verfahren ist jedoch nicht geeignet, verschiedene Kühlmittel in der gleichen Klimaanlage ohne weitere Änderung der Steuerung der Klimaanlage selber zu verwenden, da die Bezugswerte nur für das jeweils eingefüllte Kühlmittel gelten und deshalb bei Änderung des Kühlmittels die Steuerung entsprechend umgestellt werden muß.

Gegenwärtig wird als Kühlmittel für den Kühlmittelkreislauf verbreitet der Fluorkohlenwasserstoff 1,1,1,2-Tetrafluorethan unter der Bezeichnung R134a eingesetzt, der im Gegensatz zu den früher verwendeten Fluorchlorkohlenwasserstoffen (FCKW) keine Schädigung der Ozonschicht in der Erdatmosphäre hervorruft.

Die Aufgabe der Erfindung besteht darin, eine Klimaanlage zu schaffen, die in einfacher Weise an unterschiedliche nationale gesetzliche Regelungen angepasst werden kann.

Diese Aufgabe wird durch eine Klimaanlage mit den Merkmalen des Anspruchs 1 gelöst. Vorteilhafte Weiterbildungen der Erfindung sind Gegenstand von Unteransprüchen.

Indem ein Steuergerät vorgesehen ist, das mit wenigstens einer der Kühlmittelkreislaufkomponenten verbunden ist und das für eine Anpassung einer Betriebscharakteristik der Kühlmittelkreislaufkomponente an wenigstens zwei unterschiedliche Kühlmittel eingerichtet ist, und wobei die Klimaanlage das von ihr verwendete Kühlmittel selbsttätig ermittelt, indem in einem Ruhezustand der Klimaanlage ein Ruhedruck des Kühlmittels und eine Ruhetemperatur des Kühlmittels und/oder eine Umgebungstemperatur ermittelt werden, wobei die ermittelten Werte für den Ruhedruck und die Ruhetemperatur und/oder die Umgebungstemperatur in einer Wertetabelle abgelegt und/oder in das Steuergerät eingespeist werden und die als Berechnungsgrundlage für die Ermittlung des in der Klimaanlage verwendeten Kühlmittels dienen und/oder das Steuergerät derart eingerichtet ist, dass es ein in den Kühlmittelkreislauf eingefülltes Kühlmittel anhand von gespeicherten Korrelationen eines Drucks am Kompressor und einer Temperatur am Verdampfer, insbesondere unter Einbeziehung von weiteren Parametern wie einer Umgebungstemperatur, ermitteln kann, kann die Klimaanlage mit wenigstens zwei unterschiedlichen Kühlmitteln betrieben werden, ohne dass bei Befüllung des Kühlmittelkreislaufs mit dem einen oder dem anderen Kühlmittel tief greifende Veränderungen am Kühlmittelkreislauf oder am Steuergerät vorgenommen werden müssen. Bei den Kühlmitteln kann es sich um Reinstoffe oder um Mischungen, insbesondere mehrerer unterschiedlicher Kühlmittel, handeln.

Vorzugsweise weisen die wenigstens zwei unterschiedlichen Kühlmittel, auf die das Steuergerät eingerichtet ist, ähnliche Kennwerte wie Dichte, Wärmeübertragungseigenschaften, Viskosität und Wärmekapazität auf.

Bei einer anderen vorteilhaften Ausführungsform der Erfindung ist das Steuergerät programmierbar eingerichtet und kann nach Befüllung mit einem Kühlmittel mit den kühlmittelspezifischen Kennlinien, Kennfeldern oder Berechnungsalgorithmen programmiert werden.

In vorteilhafter Weise ist die Expansionseinrichtung im Kühlmittelkreislauf als Kapillarrohr ("Orifice") gestaltet, da ein derartiges Kapillarrohr eine Verwendung eines breiten Spektrums an Kühlmitteln ermöglicht, ohne dass für die verschiedenen Kühlmittel Veränderungen am Kapillarrohr vorgenommen werden müssen.

In Ausgestaltung der Erfindung ist vorgesehen, dass das Steuergerät mit dem Kompressor verbunden ist und für eine kühlmittelabhängige Beeinflussung eines Kompressordrucks und/oder einer Kompressorleistung eingerichtet ist. Als Kompressordruck wird der maximale Druck bezeichnet, der durch Komprimierung des Kühlmittels im Kompressor erzielt werden kann. Da sich unterschiedliche Kühlmittel auch unterschiedlich leicht komprimieren lassen und für diese unterschiedlichen Kühlmittel auch unterschiedliche Druckdifferenzen in der Expansionseinrichtung erzielt werden müssen, um eine im Wesentlichen gleiche Kühlleistung für die Klimaanlage zu erzielen, kann bei einem verstellbaren Kompressor der Kompressordruck, insbesondere durch Einstellung des Kompressorhubs, vorgegeben werden. Alternativ oder ergänzend kann die an den Kompressor bereitgestellte Leistung von der Steuereinrichtung gesteuert oder geregelt werden, indem entweder eine Drosselung der bereitzustellenden Leistung vorgenommen wird oder indem der Kompressor nur zeitweilig betrieben wird, also eine Einschaltdauer von kleiner 100% aufweist. Sofern der Kompressor von einer internen Brennkraftmaschine eines Kraftfahrzeugs angetrieben wird, kann zwischen Brennkraftmaschine und Kompressor eine steuerbare Kupplung vorgesehen werden, die vom Steuergerät beeinflussbar ist, um eine Leistungsreduzierung durch Schlupf oder eine Abschaltung der Leistungszufuhr durch Auskuppeln zu bewirken.

In weiterer Ausgestaltung der Erfindung ist vorgesehen, dass an dem Verdampfer ein mit dem Steuergerät verbundener Temperatursensor angebracht ist, und dass das Steuergerät für eine Beeinflussung des Kompressordrucks und/oder der Kompressorleistung in Abhängigkeit vom Kühlmittel und in Abhängigkeit von einem Temperatursignal des Temperatursensors eingerichtet ist. Mit Hilfe des am Verdampfer angebrachten Temperatursensors kann das Steuergerät bei Vorliegen einer zu geringen Verdampfertemperatur, die zu einer Vereisung des Verdampfers führen könnte, eine Leistungsreduzierung oder Abschaltung des Kompressors vornehmen, so dass zeitweilig kein Kühlmittel im Verdampfer expandiert wird. Dadurch kann der Verdampfer mit Hilfe von Umgebungsluft oder Innenraumluft des Kraftfahrzeugs wieder auf eine Temperatur gebracht werden, bei der eine Vereisung ausgeschlossen werden kann. In Abhängigkeit vom verwendeten Kühlmittel und in Abhängigkeit von der gemessenen Temperatur des Verdampfers findet eine unterschiedliche Beeinflussung des Kompressordrucks und/oder der Kompressorleistung statt.

In weiterer Ausgestaltung der Erfindung ist vorgesehen, dass an dem Kompressor, ein Drucksensor angebracht ist, und dass das Steuergerät für eine Beeinflussung des Kompressordrucks und/oder der Kompressorleistung in Abhängigkeit vom Kühlmittel und in Abhängigkeit von einem Drucksignal des Drucksensors eingerichtet ist. Das vom Drucksensor ermittelte Drucksignal ermöglicht es dem Steuergerät, in Kenntnis des verwendeten Kühlmittels Rückschlüsse auf die Temperatur am Verdampfer zu ziehen und eventuell eine Leistungsreduzierung oder eine Druckreduzierung am Kompressor vorzunehmen, wenn eine Vereisung des Verdampfers droht. Der Drucksensor kann der Saugseite oder der Druckseite des Kompressors zugeordnet sein.

In weiterer Ausgestaltung der Erfindung ist vorgesehen, dass das Steuergerät mit einer am Kondensator angebrachten Kühleinrichtung verbunden ist und für eine Ansteuerung der Kühleinrichtung in Abhängigkeit vom Kühlmittel oder vom Kühlmittel und einer Temperatur am Verdampfer und/oder einem Druck am Kompressor eingerichtet ist. Der Kondensator ist ein Wärmetauscher, in dem das vom Kompressor durch die Verdichtung erhitzte Kühlmittel strömt und der von Umgebungsluft umströmt wird, um eine Abkühlung des Kühlmittels herbeizuführen. Um den Wirkungsgrad des Kondensators zu erhöhen, wird die Umgebungsluft mit einer als Gebläse ausgeführten Kühleinrichtung auf den Kondensator gelenkt. Dadurch kann mehr Wärme aus dem Kondensator abgeführt werden, womit das Kühlmittel bei Austritt aus dem Kondensator eine geringere Temperatur aufweist und somit eine größere Kühlleistung erbringen kann. Die Kühleinrichtung wird in Abhängigkeit vom verwendeten Kühlmittel, gegebenenfalls unter Einbeziehung der Temperatur des Verdampfers und/oder dem Druck am Kompressor angesteuert, um eine ausreichende Zusatzkühlung für das Kühlmittel im Kondensator herbeiführen zu können.

In weiterer Ausgestaltung der Erfindung ist vorgesehen, dass die Expansionseinrichtung ein auswechselbares Kapillarrohr aufweist, das an das Kühlmittel angepasst ist. Das Kapillarrohr in der Expansionseinrichtung wird auch als "Orifice" bezeichnet und ist eine Düse oder Drosselblende, die einen Volumenstrom des Kühlmittels begrenzt und somit gewährleistet, dass zwischen der Ausgangsseite des Kompressors und dem Kapillarrohr ein hoher Druck im Kühlmittelkreislauf herrscht, während zwischen dem Kapillarrohr und der Eingangsseite des Kompressors ein geringerer Druck herrscht. Durch die Drosselwirkung des Kapillarrohrs und die dadurch bewirkte Druckreduzierung für das Kühlmittel sowie durch die Bereitstellung von Wärme am Verdampfer wird das Kühlmittel verdampft und entzieht somit der Umgebungsluft oder der Innenraumluft, die den Verdampfer umströmt, eine vorgebbare Wärmemenge. Dadurch wird die Umgebungsluft oder Innenraumluft gekühlt und das Kühlmittel strömt im Wesentlichen im gasförmigen Aggregatzustand in Richtung der Eingangsseite des Kompressors ab. Die Drosseleigenschaften des Kapillarrohrs werden im Wesentlichen durch seinen Innendurchmesser und durch seine Länge bestimmt, die in Kombination als normierter Wirkquerschnitt ausgedrückt werden können. Die Anforderungen an den Wirkquerschnitt können zwischen den unterschiedlichen Kühlmitteln verschieden sein, so dass eine Anpassung des Kühlmittelkreislaufs an unterschiedliche Kühlmittel durch Austausch des einfach aufgebauten Kapillarrohrs vorgenommen werden kann.

In weiterer Ausgestaltung der Erfindung ist vorgesehen, dass das Steuergerät wenigstens zwei unterschiedliche Kennlinien oder Kennfelder oder Berechnungsalgorithmen für eine Ansteuerung des Kompressors und/oder eines Lüfters für den Kondensator in Abhängigkeit vom Kühlmittel und/oder einem Druck am Kompressor und/oder einer Temperatur am Verdampfer aufweist. Eine Kennlinie ist eine zweidimensionale Repräsentation eines Zusammenhangs zwischen einem ersten Parameter, beispielsweise einer Leistungsabgabe an den Kompressor oder einer Einschaltdauer für den Lüfter am Kondensator, und einem zweiten Parameter, beispielsweise dem Druck am Kompressor oder der Temperatur am Kondensator. Ein Kennfeld ist eine drei- oder mehrdimensionale Repräsentation von Zusammenhängen zwischen wenigstens drei Parametern. Ein Algorithmus ist eine Rechenformel, mit deren Hilfe wenigstens ein Parameter in Kenntnis eines anderen Parameters errechnet werden kann. Erfindungsgemäß kann das Steuergerät durch Auswahl einer der beiden Kennlinien, Kennfelder oder Algorithmen in vorteilhafter Weise auf ein erstes bzw. auf ein zweites Kühlmittel abgestimmt werden.

In weiterer Ausgestaltung der Erfindung ist vorgesehen, dass das Steuergerät derart eingerichtet ist, dass es ein in den Kühlmittelkreislauf eingefülltes Kühlmittel anhand von gespeicherten Korrelationen eines Drucks am Kompressor und einer Temperatur am Verdampfer, insbesondere unter Einbeziehung von weiteren Parametern wie einer Umgebungstemperatur, ermitteln kann. Somit wird gewährleistet, dass die Klimaanlage nach einer Befüllung mit einem zugelassenen Kühlmittel in einem optimalen Betriebszustand betrieben werden kann, selbst wenn es sich bei dem Kühlmittel um ein anderes als das ursprünglich eingefüllte Kühlmittel handelt. Dieser Fall kann insbesondere dann eintreten, wenn im Rahmen einer Wartung der Klimaanlage neues Kühlmittel eingefüllt wird, das entweder aus Verfügbarkeitsgründen oder aufgrund geänderter gesetzlicher Vorgaben nicht mit dem ursprünglich eingefüllten Kühlmittel identisch ist. Eine Veränderung des Kühlmittels kann auch aufgrund von Degenerationseffekten des ursprünglich eingefüllten Kühlmittels oder aufgrund einer Durchmischung von Kühlmitteln, wie sie insbesondere bei der Nachfüllung der Klimaanlage auftreten kann, vorliegen. Ein selektives Entweichen von Kühlmittelbestandteilen kann ebenfalls zu einer Veränderung der Eigenschaften des Kühlmittels führen, die durch die erfindungsgemäße Ausgestaltung des Steuergeräts teilweise oder vollständig ausgeglichen werden kann, indem die entsprechenden Parameter bzw. die zugrunde liegenden Algorithmen im Steuergerät angeglichen werden.

Bei einer vorteilhaften Ausführungsform der Erfindung ist in dem Steuergerät wenigstens ein frei programmierbarer Speicherbereich vorgesehen, der eine Speicherung wenigstens einer Kennlinie und/oder eines Kennfeldes und/oder eines oder mehrerer Korrekturfaktoren und/oder eines Berechnungsalgorithmus ermöglicht. Damit kann eine flexible Anpassung des Steuergeräts an wenigstens ein weiteres Kühlmittel durch eine Programmierung vor oder nach Befüllung des Kühlmittelkreislaufs mit dem entsprechenden Kühlmittel gewährleistet werden. Dies gewährleistet eine besonders flexible Wartung der Klimaanlage, da diese auch auf Kühlmittel abgestimmt werden kann, die zum Zeitpunkt der Produktion der Klimaanlage noch nicht vorgesehen waren.

In weiterer Ausgestaltung der Erfindung ist vorgesehen, dass der Kompressor einen einstellbaren Hub aufweist, und dass das Steuergerät für eine Verstellung des Kompressorhubs eingerichtet ist. Durch einen verstellbaren Hub des Kompressors kann in einfacher Weise eine Beeinflussung des Kompressordrucks vorgenommen werden, ohne dass eine Leistungszufuhr an den Kompressor beeinflusst werden muss oder ein wiederkehrendes Zu- und Abschalten des Kompressors zur Leistungsbegrenzung stattfindet. Dies wirkt sich insbesondere bei einem Kompressor, der direkt von einer Brennkraftmaschine angetrieben wird, vorteilhaft aus, da nur die Brennkraftmaschine nur mit geringen Lastwechseln seitens des Kompressors beaufschlagt wird.

In weiterer Ausgestaltung der Erfindung ist vorgesehen, dass ein Akkumulator zum Trennen von flüssigem und gasförmigem Kühlmittel vorgesehen ist. Der Akkumulator verhindert, dass nicht restlos verdampftes Kühlmittel vom Kompressor angesaugt wird und dort etwa zu Beschädigungen führt.

In weiterer Ausgestaltung der Erfindung ist vorgesehen, dass das Steuergerät mit einem am Kompressor angebrachten, einstellbaren Druckregelventil verbunden ist, das zur Beeinflussung einer Zieltemperatur am Verdampfer vorgesehen ist. Das Druckregelventil ist für die Regelung eines Saugdruckzielwerts vorgesehen, der insbesondere durch Ansteuerung des Druckregelventils mit einem PWM-Signal (Puls-Weiten-Modulations-Signals) des Steuergeräts geregelt werden kann. Zu dem Saugdruckzielwert korreliert in Abhängigkeit vom verwendeten Kältemittel eine Zieltemperatur am Verdampfer; diese wird insbesondere durch einen im Steuergerät vorgesehenen PID-Regler (Proportional-Integral-Differential-Regler) für das Druckregelventil eingestellt.

In weiterer Ausgestaltung der Erfindung ist vorgesehen, dass ein Wärmetauscher zwischen einem Auslassanschluss des Kondensators und einem Einlassanschluss des Kompressors angeordnet ist. Dies ermöglicht eine Vorwärmung des vom Kompressor angesaugten Kühlmittels sowie eine Zusatzkühlung des Kühlmittels vor dem Eintritt in die Expansionseinrichtung. Damit kann der Wirkungsgrad der Klimaanlage bei bestimmten Kühlmitteln erhöht werden.

Gemäß einem weiteren Aspekt der Erfindung ist ein Verfahren zum Betrieb einer Klimaanlage vorgesehen, bei dem in einem Ruhezustand der Klimaanlage ein Ruhedruck eines Kühlmittels und eine Ruhetemperatur des Kühlmittels und/oder eine Umgebungstemperatur ermittelt werden. Die ermittelten Werte für den Ruhedruck und die Ruhetemperatur und/oder die Umgebungstemperatur können in einer Wertetabelle abgelegt und/oder in ein Steuergerät eingespeist werden und dienen als Berechnungsgrundlage für die Ermittlung von charakteristischen Eigenschaften der Komponenten der Klimaanlage und/oder des in der Klimaanlage verwendeten Kühlmittels. Der Ruhezustand der Klimaanlage kann insbesondere über die Motortemperatur des Kraftfahrzeugs, in dem die Klimaanlage eingebaut ist, ermittelt werden, die über ein Bussystem abgefragt werden kann und die unterhalb eines vorgebbaren Schwellenwerts liegen muss, um eine ordnungsgemäße Bestimmung des Ruhedrucks vornehmen zu können.

In weiterer Ausgestaltung der Erfindung ist vorgesehen, dass in einem Betriebszustand der Klimaanlage ein Betriebsdruck eines Kühlmittels und eine Betriebstemperatur des Kühlmittels und/oder eine Umgebungstemperatur ermittelt werden. Der Betriebsdruck und die Betriebstemperatur werden ebenfalls in einer Wertetabelle abgelegt und/oder in ein Steuergerät eingespeist und dienen wie die Ruhetemperatur und der Ruhedruck der Charakterisierung von Eigenschaften der Klimaanlage.

In weiterer Ausgestaltung der Erfindung ist vorgesehen, dass im Betriebszustand der Klimaanlage eine Kühlleistung einer Kühleinrichtung, die zur Kühlung eines Kondensators vorgesehen ist, von einem Steuergerät eingestellt wird und der Betriebsdruck des Kühlmittels in Abhängigkeit von der eingestellten Kühlleistung ermittelt wird. Vorzugsweise wird die Kühlleistung der Kühleinrichtung, die beispielsweise als dem Kondensator zugeordneter Lüfter ausgebildet sein kann, kontinuierlich oder schrittweise von einer minimalen Kühlleistung bis zu einer maximalen Kühlleistung erhöht und in kontinuierlicher oder schrittweiser Messung der Betriebsdruck des Kühlmittels ermittelt. Die ermittelten Wertepaare (Betriebsdruck korreliert mit Kühlleistung) werden in einer Wertetabelle abgelegt.

In weiterer Ausgestaltung der Erfindung ist vorgesehen, dass eine Lüftungseinrichtung zur Abfuhr einer von einem Verdampfer bereitgestellten Kälteleistung vom Steuergerät auf einen, insbesondere minimalen, Luftmassenstrom eingestellt wird und der der Betriebsdruck des Kühlmittels in Abhängigkeit von dem eingestellten Luftmassenstrom ermittelt wird. Die Lüftungseinrichtung bestimmt über den Luftmassenstrom und in Abhängigkeit von der Temperatur der zugeführten Luft darüber, wie viel Energie am Verdampfer zur Verdampfung des Kühlmittels bereitgestellt wird. Während bei einer geringen Lufttemperatur (insbesondere einer geringen Innenraumtemperatur des mit der Klimaanlage ausgerüsteten Kraftfahrzeugs) und einem minimalen nur wenig Energie am Verdampfer bereitgestellt wird, um das Kühlmittel zu verdampfen, wird bei hoher Lufttemperatur und maximalem Luftmassenstrom eine hohe Energiemenge am Verdampfer bereitgestellt. In Kenntnis der jeweils aktuellen Temperatur der von der Lüftungseinrichtung zugeführten Luft kann bei ebenfalls bekanntem Luftmassenstrom eine Schwelle ermittelt werden, ab der der Betriebsdruck des Kühlmittels nicht mehr abnimmt, selbst wenn die Kühlleistung der Kühleinrichtung, die der Kühlung des Kondensators dient, weiter gesteigert wird. Die Werteschar aus der der Kühleinrichtung zugeführten Kühlleistung, dem Luftmassenstrom und der Lufttemperatur am Verdampfer und dem sich einstellenden, minimalen Kältemitteldruck wird in einer Wertetabelle abgespeichert und/oder in ein Steuergerät eingespeist. Bei der Lüftungseinrichtung kann es sich insbesondere um einen Ventilator handeln, der zur Umwälzung von Luft in einem Innenraum des Kraftfahrzeugs und/oder zur Bereitstellung von Frischluft in den Innenraum des Kraftfahrzeugs dient.

In weiterer Ausgestaltung der Erfindung ist vorgesehen, dass der Ruhedruck des Kühlmittels, der, insbesondere in Abhängigkeit von der Kühlleistung einer Kühleinrichtung und/oder in Abhängigkeit von dem Luftmassenstrom der Lüftungseinrichtung ermittelte, Betriebsdruck des Kühlmittels, die Betriebstemperatur des Kühlmittels und/oder die Umgebungstemperatur an das Steuergerät bereitgestellt werden, um wenigstens eine Kennlinie des Kühlmittels, insbesondere eine Dampfdruckkurve des Kühlmittels, zu ermitteln. Die Kennlinie des Kühlmittels kann bei jedem Neustart des Kraftfahrzeugs, das mit der Klimaanlage ausgerüstet ist, oder in zufälligen oder vorgegebenen Intervallen erfolgen und dient der Erfassung von Änderungen der Eigenschaften des Kühlmittels. Derartige Eigenschaftsänderungen können eintreten, wenn sich hochflüchtige Bestandteile des Kühlmittels verflüchtigen, wenn zu einem ersten Kühlmittel bei Durchführung von Servicearbeiten ein zweites Kühlmitte hinzugefüllt wird oder wenn sich Bestandteile des Kühlmittels im Laufe der Zeit verändern, beispielsweise zersetzen. Durch Berücksichtigung der veränderlichen Eigenschaften des Kühlmittels kann eine vorteilhafte Anpassung der Betriebsweise der Klimaanlage vorgenommen werden, um im Rahmen der vorliegenden Randbedingungen mit minimalem Energieeinsatz eine maximale Kühlleistung zu erzielen. Bei einer vorteilhaften Ausführungsform der Erfindung kann anhand der Kennlinie des Kühlmittels eine Diagnose für die Kühlfähigkeit der jeweils aktuell vorliegenden Kühlmittelzusammensetzung vorgenommen werden und bei Unterschreiten einer Mindest-Kühlfähigkeit eine Benachrichtigung des Nutzers der Klimaanlage vorgesehen werden.

In weiterer Ausgestaltung der Erfindung ist vorgesehen, dass das Steuergerät eine Einstellung eines Saugdrucks und/ oder einer Verdampfertemperatur durch Beeinflussung einer Leistung eines Kompressors, insbesondere durch Beeinflussung einer Einschaltdauer des Kompressors oder durch Ansteuern eines dem Kompressor zugeordneten Druckregelventils, in Abhängigkeit von der ermittelten Kennlinie des Kühlmittels vornimmt. Damit wird ein energieeffizienter Betrieb der Klimaanlage in Abhängigkeit von der Zusammensetzung des Kühlmittels gewährleistet.

Die Erfindung wird nachfolgend anhand der Figuren beispielhaft näher erläutert. Es zeigen:
- Fig. 1: eine schematische Darstellung einer ersten Ausführungsform der Erfindung mit einem elektrisch angetriebenen Kompressor mit festem Hub;
- Fig. 2: eine schematische Darstellung einer zweiten Ausführungsform der Erfindung mit einem direkt von der Brennkraftmaschine angetriebenen Kompressor mit variablem Hub; und
- Fig. 3: eine schematische Darstellung einer dritten Ausführungsform der Erfindung mit einer austauschbaren Drosselkapillare und einem zusätzlichen Wärmetauscher zwischen Kondensatorausgang und Kompressoreingang.

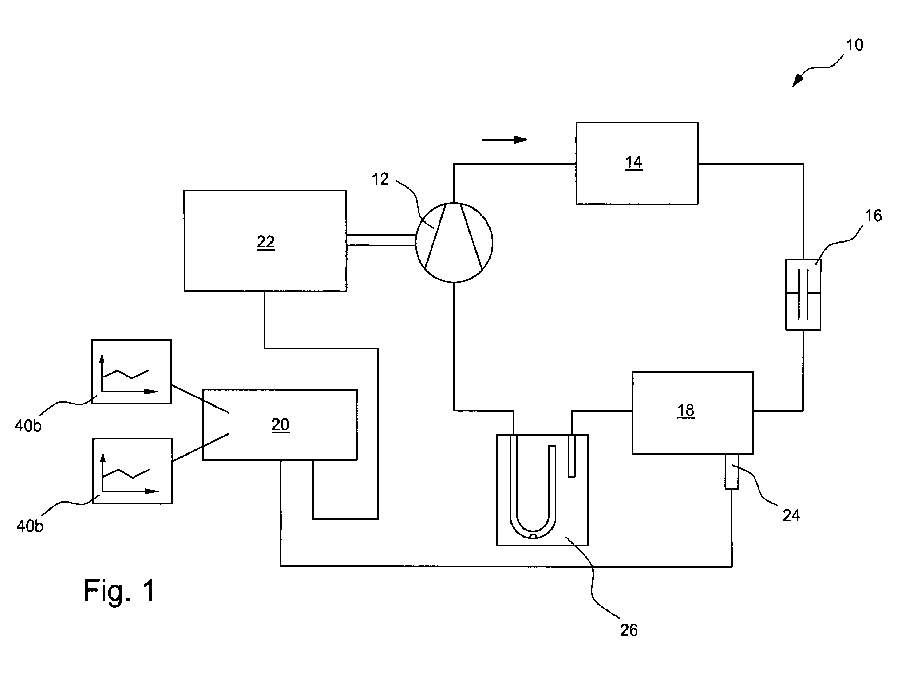

Bei den Ausführungsformen der Fig. 1, 2 und 3 werden für funktionsgleiche Komponenten gleiche Bezugsziffern verwendet.

Eine in der Fig. 1 dargestellte Klimaanlage 10 für ein Kraftfahrzeug weist einen Kühlmittelkreislauf mit einem Kompressor 12 zum Komprimieren des Kühlmittels, einem Kondensator 14 zum Abkühlen des komprimierten Kühlmittels; eine als Drosselkapillare 16 ausgeführten Expansionseinrichtung zur Druckreduzierung des Kühlmittels und einen Verdampfer 18 zum Verdampfen des Kühlmittels auf. Weiterhin ist dem Kühlmittelkreislauf ein Steuergerät 20 zugeordnet, das mit einem Elektromotor 22 verbunden ist, der zum Antrieb des Kompressors 12 vorgesehen ist. Das Steuergerät 20 ist zudem mit einem am Verdampfer 18 angebrachten Temperatursensor 24 verbunden, der ein Temperatursignal bereitstellt, das proportional zur Temperatur am Verdampfer 18 ist.

Der Kompressor 12 weist einen festen, nicht verstellbaren Hub auf, so dass eine Anpassung des Kühlmitteldrucks im Kühlmittelkreislauf durch ein zyklisches oder azyklisches Komprimieren von Kühlmittel erreicht werden muss. Da bei der dargestellten Ausführungsform kein Drucksensor für das Kühlmittel vorgesehen ist, wird der vom Kompressor 12 bereitzustellende Kühlmitteldruck anhand des Temperatursensors 24 am Verdampfer 18 unter Verwendung einer von wenigstens zwei im Steuergerät 20 hinterlegten, kühlmittelabhängigen Kennlinien 40a, 40b ermittelt, die schematisch als Graphen dem Steuergerät 20 zugeordnet sind. Aus der Kennlinie kann mit Hilfe eines im Steuergerät hinterlegten Berechnungsalgorithmus auch abgeleitet werden, mit welcher Leistungszufuhr und/oder Einschaltdauer des Elektromotors 22 der gewünschte Kühlmitteldruck erreicht werden kann.

Bei einer nicht dargestellten Ausführungsform der Erfindung ist der Kompressor über eine schaltbare Kupplung und einen Keilriemen mit der Kurbelwelle eines Verbrennungsmotors gekoppelt. Die schaltbare Kupplung wird vom Steuergerät angesteuert und ermöglicht ein bedarfsgerechtes Zu- oder Abschalten des Kompressors zur Regelung einer mittleren Kompressorleistung.

Während des Betriebs des Kompressors 12 wird das Kühlmittel komprimiert, wobei es durch die bei der Kompression stattfindende Energiezufuhr auch erwärmt wird. Ein Teil der zugeführten Wärme wird im Kondensator 14, der als Wärmetauscher mit der Umgebungsluft dient, aus dem Kühlmittel abgeführt, so dass dieses nunmehr einen hohen Druck und einen reduzierten Energiegehalt aufweist und in den flüssigen Aggregatszustand überführt wird. Die stromab des Kondensators 14 angeordnete Drosselkapillare 16 ist im Hinblick ihren Innendurchmesser und ihre Länge im Wesentlichen auf die Eigenschaften des eingesetzten Kühlmittels angepasst, so dass diese einen vorgebbaren Strömungswiderstand für das flüssige Kühlmittel darstellt. Da der Kompressor 12 mehr Kühlmittel fördern kann als durch die Drosselkapillare 16 abströmen kann, baut sich zwischen Kompressor 12 und Drosselkapillare 16 ein kühlmittelabhängiger Druck auf. Der kühlmittelabhängige Druck wird insbesondere vom Dampfdruck des Kühlmittels sowie von dessen Viskosität im flüssigen Zustand bestimmt und ist in der entsprechenden Kennlinie 40a, 40b im Steuergerät 20 hinterlegt.

Das Kühlmittel, das die Drosselkapillare 16 durchströmt, tritt in einen Bereich geringen Drucks ein und expandiert hierbei. Durch die Expansion und die Wärmezufuhr am Verdampfer 18 wechselt das Kühlmittel - zumindest im Wesentlichen - vom flüssigen in den gasförmigen Aggregatzustand, wobei eine erhebliche Energiemenge zur Verdunstung benötigt wird. Diese Energiemenge wird der Umgebungsluft im Bereich des Verdampfers 18 entzogen, die Luft wird somit gekühlt und kann einem (nicht dargestellten) Innenraum eines Kraftfahrzeugs zugeführt werden. Das nunmehr zumindest im Wesentlichen gasförmige Kühlmittel strömt durch einen Akkumulator 26, um eventuell vorhandene flüssige Bestandteile abzutrennen, und wird anschließend wieder dem Kompressor 12 zugeführt, um erneut verdichtet und verflüssigt zu werden.

Anhand des am Verdampfer 18 angebrachten Temperatursensors 24 unter Einbeziehung einer der beiden kühlmittelabhängigen Kennlinien 40a, 40b kann das Steuergerät 20 Rückschlüsse darauf ziehen, welcher Kühlungsbedarf gegenwärtig besteht und ob der Kompressor 12 weiteres Kühlmittel komprimieren muss oder nicht.

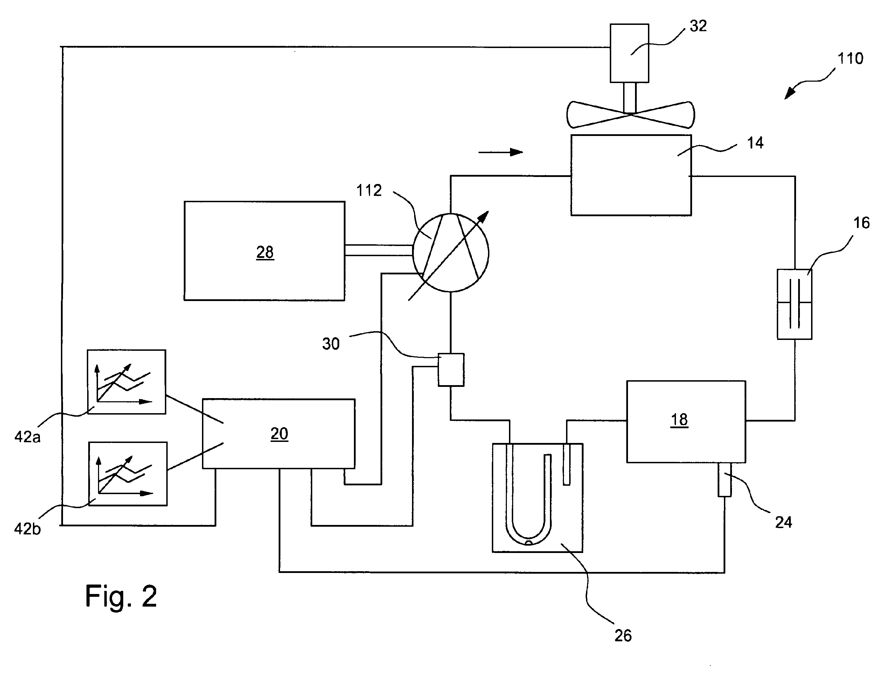

Die Ausführungsform der Klimaanlage 110 gemäß der Fig. 2 unterscheidet sich von der Ausführungsform gemäß Fig. 1 dadurch, dass der Verbrennungsmotor 28 eines nicht näher dargestellten Kraftfahrzeugs zum Antrieb des Kompressors 112 eingesetzt wird, der als verstellbarer Kompressor 112 mit von außen über das Steuergerät 20 und eine nicht näher dargestellte Stelleinrichtung einstellbarem Hub ausgeführt ist und der dadurch eine Einflussnahme auf dem im Kühlmittelkreislauf herrschenden Kühlmitteldruck ermöglicht. Das Steuergerät 20 ist mit einem Drucksensor 30 verbunden, der im Kühlmittelkreislauf zwischen dem Akkumulator 26 und dem Kompressor 112 angeordnet ist und der eine Ermittlung des Drucks des gasförmigen Kühlmittels ermöglicht.

Bei einer nicht dargestellten Ausführungsform der Erfindung ist ergänzend oder alternativ zu dem zwischen dem Akkumulator und dem Kompressor angeordneten Drucksensor ein Drucksensor hochdruckseitig am Auslass des Kompressors oder stromab hinter dem Kondensator angeordnet.

Weiterhin ist das Steuergerät 20 mit einem Lüfter 32 verbunden, der dem Kondensator 14 zugeordnet ist, um einen verbesserten Wärmeaustausch des Kondensators 14 mit der Umgebungsluft zu bewirken. Im Steuergerät 20 sind für mehrere Kühlmittel jeweils zugeordnete mehrdimensionale Kennfelder 42a, 42b hinterlegt, in denen Zusammenhänge zwischen dem Druck des Kühlmittels am Drucksensor 30, der Temperatur am Verdampfer 18 und dem vom Kompressor 112 bereitzustellenden Kühlmitteldruck sowie dem vom Lüfter 32 bereitzustellenden Luftstrom zur Kühlung des Kondensators festgehalten sind. Die Kennfelder 42a, 42b geben somit die für die Ansteuerung des verstellbaren Kompressors 112 und des Lüfters 32 notwendigen Signalpegel vor, um einen effizienten Betrieb der Klimaanlage 110 zu gewährleisten.

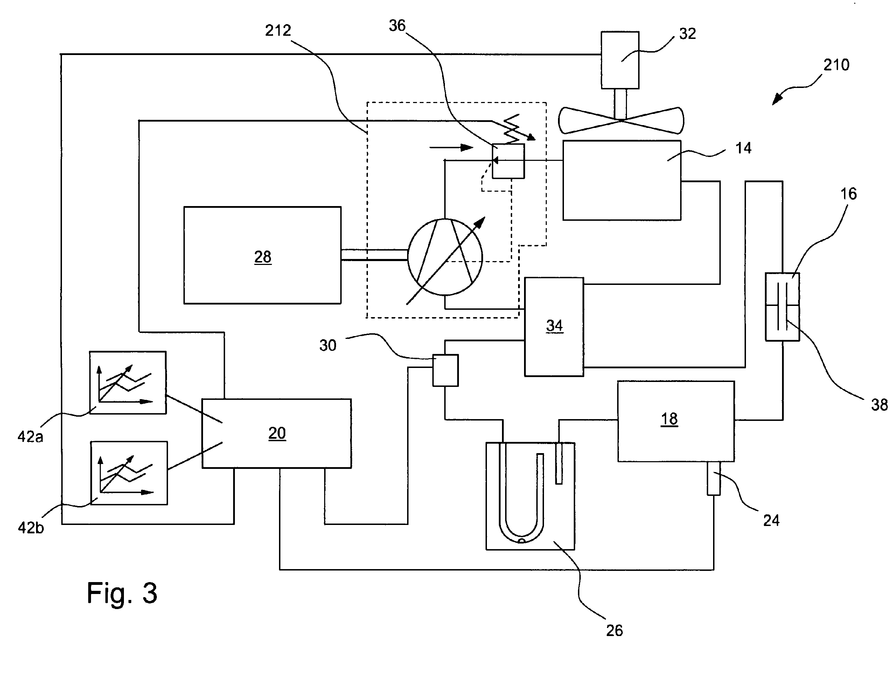

Bei der Ausführungsform der Klimaanlage 210 gemäß der Figur 3 ist zusätzlich zu den Komponenten gemäß der Fig. 2 ein Wärmetauscher 34 vorgesehen, der einen Wärmestrom zwischen dem Ausgangsanschluss des Kondensators 14 und dem Eingangsanschluss des Kompressors 212 ermöglicht. Ein dem Kompressor 212 nachgeschaltetes, vom Steuergerät 20 ansteuerbares Druckregelventil 36 regelt den Druck des vom Kompressor 212 komprimierten Kühlmittels und somit auch den Saugdruck des vom Kompressor 212 angesaugten Kühlmittels, indem der Hub des einstellbaren Kompressors 212 eingestellt wird. Dies geschieht durch die Vorgabe eines Druckwerts vom Steuergerät 20 an das Druckregelventil 36, das seinerseits über eine Steuerleitung den Kompressor 212 beeinflusst.

Da eine Korrelation zwischen dem Saugdruck und der Temperatur am Verdampfer 18 besteht, kann über die Einstellung des Druckregelventils 36 in Abhängigkeit vom verwendeten Kühlmittel eine Einstellung der Verdampfertemperatur vorgenommen werden. Das in der Drosselkapillare 16 eingesetzte Drosselrohr 38 ist austauschbar gestaltet, um eine vorteilhafte Anpassung an unterschiedliche Kühlmittel vornehmen zu können. In dem Steuergerät 20 sind mehrere mehrdimensionale Kennfelder 42a, 42b hinterlegt, die über die aus der Ausführungsform der Fig. 2 bekannte Ansteuerung des Kompressors 212 und des Lüfters 32 hinaus auch eine Ansteuerung des Druckregelventils 36 ermöglichen, um eine günstige Wirkungsweise der Klimaanlage 10 hervorrufen zu können.

Bei einer nicht dargestellten Ausführungsform der Erfindung ist in Abwandlung der Ausführungsform gemäß der Fig. 3 anstelle des auswechselbaren Drosselrohrs ein elektronisch vom Steuergerät einstellbares Expansionsventil vorgesehen, mit dessen Hilfe die Drosselwirkung auf die Erfordernisse der Klimaanlage eingestellt werden kann. Zu diesem Zweck sind im Steuergerät entsprechende Kennlinien für das Expansionsventil abgelegt, die einen Zusammenhang zwischen der Zusammensetzung und den Eigenschaften des Kühlmittels und der jeweils erforderlichen Drosselung beschreiben.

Eine Anpassung der Klimaanlagen 10, 110, 210 gemäß den Ausführungsformen der Fig. 1 bis 3 an unterschiedliche Kühlmittel kann durch eine Auswahl einer im Steuergerät 20 hinterlegten Kennlinie bzw. eines Kennfeldes oder eines Berechnungsalgorithmus erfolgen, beispielsweise am Ende eines Produktionsprozesses bei der Programmierung der übrigen Steuergeräte des Kraftfahrzeugs. Alternativ kann das Steuergerät 20 nach Befüllung des Kühlmittelkreislaufs mit einem Kühlmittel mit den entsprechenden Kennlinien, Kennfeldern oder Berechnungsalgorithmen programmiert werden.

Bei einer weiteren Ausführungsform der Erfindung ist vorgesehen, dass das Steuergerät 20 anhand der im Betrieb auftretenden Temperaturen und Drücke in dem Kühlmittelkreislauf eine eigenständige Erkennung des Kühlmittels vornimmt und anschließend die für das entsprechende Kühlmittel vorgesehenen Kennwerte für den Betrieb der Klimaanlage einsetzt.

## Patentansprüche

1. Klimaanlage (10, 110, 210) für ein Kraftfahrzeug,
mit einem wenigstens aus den Komponenten
- Kompressor (12, 112,212) zum Komprimieren des Kühlmittels,
- Kondensator (14) zum Abkühlen des komprimierten Kühlmittels;
- Expansionseinrichtung (16) zur Druckreduzierung des Kühlmittels sowie
- Verdampfer (18) zum Verdampfen des Kühlmittels,
gebildeten Kühlmittelkreislauf,
**dadurch gekennzeichnet, dass**
ein Steuergerät (20) vorgesehen ist, das mit wenigstens einer der Kühlmittelkreislaufkomponenten verbunden ist und das für eine Anpassung einer Betriebscharakteristik der Kühlmittelkreislaufkomponente an wenigstens zwei unterschiedliche Kühlmittel eingerichtet ist, und wobei die Klimaanlage das von ihr verwendete Kühlmittel selbsttätig ermittelt, indem
- in einem Ruhezustand der Klimaanlage ein Ruhedruck des Kühlmittels und eine Ruhetemperatur des Kühlmittels und/oder eine Umgebungstemperatur ermittelt werden, wobei die ermittelten Werte für den Ruhedruck und die Ruhetemperatur und/oder die Umgebungstemperatur in einer Wertetabelle abgelegt und/oder in das Steuergerät eingespeist werden und die als Berechnungsgrundlage für die Ermittlung des in der Klimaanlage verwendeten Kühlmittels dienen und/oder
- das Steuergerät (20) derart eingerichtet ist, dass es ein in den Kühlmittelkreislauf eingefülltes Kühlmittel anhand von gespeicherten Korrelationen eines Drucks am Kompressor (12, 112, 212) und einer Temperatur am Verdampfer (18), insbesondere unter Einbeziehung von weiteren Parametern wie einer Umgebungstemperatur, ermitteln kann.

2. Klimaanlage nach Anspruch 1,
**dadurch gekennzeichnet, dass**
das Steuergerät (20) mit dem Kompressor (12, 112, 212) verbunden ist und für eine kühlmittelabhängige Beeinflussung eines Kompressordrucks und/oder einer Kompressorleistung eingerichtet ist.

3. Klimaanlage nach Anspruch 1 oder 2,
**dadurch gekennzeichnet, dass**
an dem Verdampfer (18) ein mit dem Steuergerät (20) verbundener Temperatursensor (24) vorgesehen ist, und dass das Steuergerät (24) für eine Beeinflussung des Kompressordrucks und/oder der Kompressorleistung in Abhängigkeit vom Kühlmittel und in Abhängigkeit von einem Temperatursignal des Temperatursensors (24) eingerichtet ist.

4. Klimaanlage nach einem der Ansprüche 1 bis 3,
**dadurch gekennzeichnet, dass**
an dem Kompressor (12, 112, 212), insbesondere saugseitig, ein Drucksensor (30) vorgesehen ist, und dass das Steuergerät (20) für eine Beeinflussung des Kompressordrucks und/oder der Kompressorleistung in Abhängigkeit vom Kühlmittel und in Abhängigkeit von einem Drucksignal des Drucksensors (30) eingerichtet ist.

5. Klimaanlage nach einem der Ansprüche 1 bis 4,
**dadurch gekennzeichnet, dass**
das Steuergerät (20) mit einer am Kondensator (14) angebrachten Kühleinrichtung (32) verbunden ist und für eine Ansteuerung der Kühleinrichtung (32) in Abhängigkeit vom Kühlmittel oder vom Kühlmittel und einer Temperatur am Verdampfer (18) und/oder einem Druck am Kompressor (12, 112, 212) eingerichtet ist.

6. Klimaanlage nach einem der Ansprüche 1 bis 5,
**dadurch gekennzeichnet, dass**
die Expansionseinrichtung (16) ein auswechselbares Kapillarrohr (38) aufweist, das an das Kühlmittel angepasst ist

7. Klimaanlage nach einem der Ansprüche 1 bis 6,
**dadurch gekennzeichnet, dass**
das Steuergerät (20) wenigstens zwei unterschiedliche Kennlinien (40a, 40b) oder Kennfelder (42a, 42b) oder Berechnungsalgorithmen für eine Ansteuerung des Kompressors (12, 112) und/oder eines Lüfters (32) für den Kondensator (14) in Abhängigkeit vom Kühlmittel und/oder einem Druck am Kompressor (12, 112) und/oder einer Temperatur am Verdampfer (18) aufweist.

8. Klimaanlage nach einem der Ansprüche 1 bis 7,
**dadurch gekennzeichnet, dass**
das Steuergerät (20) derart eingerichtet ist, dass es ein in den Kühlmittelkreislauf eingefülltes Kühlmittel anhand von gespeicherten Korrelationen eines Drucks am Kompressor (12, 112, 212) und einer Temperatur am Verdampfer (18), insbesondere unter Einbeziehung von weiteren Parametern wie einer Umgebungstemperatur, ermitteln kann.

9. Klimaanlage nach einem der Ansprüche 1 bis 8,
**dadurch gekennzeichnet, dass**
der Kompressor (12, 112, 212) einen einstellbaren Hub aufweist und dass das Steuergerät (20) für eine Verstellung des Kompressorhubs eingerichtet ist.

10. Klimaanlage nach einem der Ansprüche 1 bis 9,
**dadurch gekennzeichnet, dass**
ein Akkumulator (26) zum Trennen von flüssigem und gasförmigem Kühlmittel vorgesehen ist.

11. Klimaanlage nach einem der Ansprüche 1 bis 10,
**dadurch gekennzeichnet, dass**
das Steuergerät (20) mit einem am Kompressor (12, 112, 212) angebrachten, einstellbaren Druckregelventil (36) verbunden ist, das zur Beeinflussung einer Zieltemperatur am Verdampfer (18) vorgesehen ist.

12. Klimaanlage nach einem der Ansprüche 1 bis 11,
**dadurch gekennzeichnet, dass**
zwischen einem Auslassanschluss des Kondensators (14) und einem Einlassanschluss des Kompressors (12, 112, 212) ein Wärmetauscher (34) angeordnet ist.

13. Verfahren zum Betreiben einer Klimaanlage nach einem der Ansprüche 1 bis 12, **dadurch gekennzeichnet, dass**
in einem Ruhezustand der Klimaanlage ein Ruhedruck eines Kühlmittels und eine Ruhetemperatur des Kühlmittels und/oder eine Umgebungstemperatur ermittelt werden.

14. Verfahren nach Anspruch 13,
**dadurch gekennzeichnet, dass**
in einem Betriebszustand der Klimaanlage ein Betriebsdruck eines Kühlmittels und eine Betriebstemperatur des Kühlmittels und/oder eine Umgebungstemperatur ermittelt werden.

15. Verfahren nach Anspruch 14,
**dadurch gekennzeichnet, dass**
im Betriebszustand der Klimaanlage eine Kühlleistung einer Kühleinrichtung (32), die zur Kühlung eines Kondensators (14) vorgesehen ist, von einem Steuergerät (20) eingestellt wird und der Betriebsdruck des Kühlmittels in Abhängigkeit von der eingestellten Kühlleistung ermittelt wird.

16. Verfahren nach Anspruch 15,
**dadurch gekennzeichnet, dass**
eine Lüftungseinrichtung zur Abfuhr einer von einem Verdampfer (18) bereitgestellten Kälteleistung vom Steuergerät (20) auf einen, insbesondere minimalen, Luftmassenstrom eingestellt wird und der der Betriebsdruck des Kühlmittels in Abhängigkeit von dem eingestellten Luftmassenstrom ermittelt werden.

17. Verfahren nach einem der Ansprüche 14 bis 16,
**dadurch gekennzeichnet, dass**
der Ruhedruck des Kühlmittels, der, insbesondere in Abhängigkeit von der Kühlleistung einer Kühleinrichtung (32) und/oder in Abhängigkeit von dem Luftmassenstrom der Lüftungseinrichtung ermittelte, Betriebsdruck des Kühlmittels, die Betriebstemperatur des Kühlmittels und/oder die Umgebungstemperatur an das Steuergerät (20) bereitgestellt werden, um wenigstens eine Kennlinie des Kühlmittels, insbesondere eine Dampfdruckkurve des Kühlmittels, zu ermitteln.

18. Verfahren nach Anspruch 17,
**dadurch gekennzeichnet, dass**
das Steuergerät (20) eine Einstellung eines Saugdrucks und/ oder einer Verdampfertemperatur durch Beeinflussung einer Leistung eines Kompressors (2, 112, 212), insbesondere durch Beeinflussung einer Einschaltdauer des Kompressors (2, 112, 212) oder durch Ansteuern eines dem Kompressor (2, 112, 212) zugeordneten Druckregelventils (36), in Abhängigkeit von der ermittelten Kennlinie des Kühlmittels vornimmt.

## Claims

1. Air-conditioning system (10, 110, 210) for a motor vehicle,
having a coolant circuit formed at least from the components:
- compressor (12, 112, 212) for compressing the coolant;
- condenser (14) for cooling the compressed coolant;
- expansion device (16) for reducing the pressure of the coolant and
- evaporator (18) for evaporating the coolant,
**characterized in that**
a control unit (20) is provided which is connected to at least one of the coolant circuit components and which is set up to adapt an operating characteristic of the coolant circuit component to at least two different coolants, and the air-conditioning system automatically determining the coolant which it is using **in that**,
- in a rest state of the air-conditioning system, a rest pressure of the coolant and a rest temperature of the coolant and/or an ambient temperature are determined, the determined values for the rest pressure and the rest temperature and/or the ambient temperature being stored in a value table and/or fed into the control unit and serving as the basis for calculation for the determination of the coolant used in the air-conditioning system, and/or
- the control unit (20) is set up such that it can determine a coolant which is filled into the coolant circuit on the basis of stored correlations of a pressure at the compressor (12, 112, 212) and of a temperature at the evaporator (18), in particular taking into consideration further parameters such as an ambient temperature.

2. Air-conditioning system according to Claim 1,
**characterized in that**
the control unit (20) is connected to the compressor (12, 112, 212) and is set up to influence a compressor pressure and/or a compressor power in a coolant-dependent fashion.

3. Air-conditioning system according to Claim 1 or 2,
**characterized in that**
a temperature sensor (24) which is connected to the control unit (20) is provided on the evaporator (18), and **characterized in that** the control unit (20) is set up to influence the compressor pressure and/or the compressor power as a function of the coolant and as a function of a temperature signal of the temperature sensor (24).

4. Air-conditioning system according to one of Claims 1 to 3,
**characterized in that**
a pressure sensor (30) is provided on the compressor (12, 112, 212), in particular at the suction side, and **characterized in that** the control unit (20) is set up to influence the compressor pressure and/or the compressor power as a function of the coolant and as a function of a pressure signal of the pressure sensor (30).

5. Air-conditioning system according to one of Claims 1 to 4,
**characterized in that**
the control unit (20) is connected to a cooling device (32) which is attached to the condenser (14) and **characterized in that** said control unit is set up to activate the cooling device (32) as a function of the coolant or as a function of the coolant and of a temperature at the evaporator (18) and/or of a pressure at the compressor (12, 112, 212).

6. Air-conditioning system according to one of Claims 1 to 5,
**characterized in that**
the expansion device (16) has an exchangeable capillary tube (38) which is adapted to the coolant.

7. Air-conditioning system according to one of Claims 1 to 6,
**characterized in that**
the control unit (20) has at least two different characteristic curves (40a, 40b) or characteristic maps (42a, 42b) or calculation algorithms for an activation of the compressor (12, 112) and/or of a fan (32) for the condenser (14) as a function of the coolant and/or of a pressure at the compressor (12, 112) and/or of a temperature at the evaporator (18).

8. Air-conditioning system according to one of Claims 1 to 7,
**characterized in that**
the control unit (20) is set up such that it can determine a coolant which is filled into the coolant circuit on the basis of stored correlations of a pressure at the compressor (12, 112, 212) and of a temperature at the evaporator (18), in particular taking into consideration further parameters such as an ambient temperature.

9. Air-conditioning system according to one of Claims 1 to 8,
**characterized in that**
the compressor (12, 112, 212) has an adjustable stroke and **in that** the control unit (20) is set up to adjust the compressor stroke.

10. Air-conditioning system according to one of Claims 1 to 9,
**characterized in that**
an accumulator (26) for separating liquid and gaseous collant is provided.

11. Air-conditioning system according to one of Claims 1 to 10,
**characterized in that**
the control unit (20) is connected to an adjustable pressure regulating valve (36) which is attached to the compressor (12, 112, 212) and which is provided for influencing a target temperature at the evaporator (18).

12. Air-conditioning system according to one of Claims 1 to 11,
**characterized in that**
a heat exchanger (34) is arranged between an outlet connection of the condenser (14) and an inlet connection of the compressor (12, 112, 212).

13. Method for operating an air-conditioning system according to one of Claims 1 to 12,
**characterized in that**,
in a rest state of the air-conditioning system, a rest pressure of a coolant and a rest temperature of the coolant and/or an ambient temperature are determined.

14. Method according to Claim 13,
**characterized in that**,
in an operating state of the air-conditioning system, an operating pressure of a coolant and an operating temperature of the coolant and/or an ambient temperature are determined.

15. Method according to Claim 14,
**characterized in that**,
in the operating state of the air-conditioning system, a cooling power of a cooling device (32) which is provided for cooling a condenser (14) is adjusted by a control unit (20), and the operating pressure of the coolant is determined as a function of the adjusted cooling power.

16. Method according to Claim 15,
**characterized in that**
a ventilation device for discharging a refrigerating power provided by an evaporator (18) is adjusted by the control unit (20) to an in particular minimum air mass flow, and the operating pressure of the coolant is determined as a function of the adjusted air mass flow.

17. Method according to one of Claims 14 to 16,
**characterized in that**
the rest pressure of the coolant, the operating pressure of the coolant, which is determined in particular as a function of the cooling power of a cooling device (32) and/or as a function of the air mass flow of the ventilation device, the operating temperature of the coolant and/or the ambient temperature are provided to the control unit (20) in order to determine at least one characteristic curve of the coolant, in particular a vapor pressure curve of the coolant.

18. Method according to Claim 17,
**characterized in that**
the control unit (20) carries out an adjustment of a suction pressure and/or of an evaporator temperature by influencing a power of a compressor (12, 112, 212), in particular by influencing an activation duration of the compressor (12, 112, 212) or by activating a pressure regulating valve (36) which is assigned to the compressor (12, 112, 212), as a function of the determined characteristic curve of the coolant.

## Revendications

1. Installation de climatisation (10, 110, 210) pour un véhicule automobile,
comprenant un circuit de refroidissement formé au moins à partir des composants suivantes :
- un compresseur (12, 112, 212) pour comprimer le réfrigérant,
- un condenseur (14) pour refroidir le réfrigérant comprimé ;
- un dispositif d'expansion (16) pour la réduction de pression du réfrigérant et
- un évaporateur (18) pour l'évaporation du réfrigérant,
**caractérisée en ce que**
l'on prévoit un appareil de commande (20) qui est connecté à au moins l'un des composants de circuit de refroidissement et qui est prévu pour adapter une caractéristique de fonctionnement des composants du circuit de refroidissement à au moins deux réfrigérants différents, l'installation de climatisation détectant automatiquement le réfrigérant qu'elle utilise par le fait que
- dans un état de repos de l'installation de climatisation, une pression de repos du réfrigérant et une température de repos du réfrigérant et/ou une température ambiante sont détectées, les valeurs détectées pour la pression de repos et la température de repos et/ou la température ambiante étant consignées dans un tableau de valeurs, et/ou étant saisies dans l'appareil de commande et servant de base de calcul pour déterminer le réfrigérant utilisé dans l'installation de climatisation et/ou
- l'appareil de commande (20) est réalisé de telle sorte qu'il puisse déterminer un réfrigérant introduit dans le circuit de refroidissement à l'aide de corrélations mémorisées d'une pression au niveau du compresseur (12, 112, 212) et d'une température au niveau de l'évaporateur (18), en particulier en tenant compte d'autres paramètres tels qu'une température ambiante.

2. Installation de climatisation selon la revendication 1,
**caractérisée en ce que**
l'appareil de commande (20) est connecté au compresseur (12, 112, 212) et est prévu pour influencer, en fonction du réfrigérant, une pression du compresseur et/ou une puissance du compresseur.

3. Installation de climatisation selon la revendication 1 ou 2,
**caractérisée en ce que**
l'on prévoit au niveau de l'évaporateur (18) un capteur de température (24) connecté à l'appareil de commande (20), et **en ce que** l'appareil de commande (20) est prévu pour influencer la pression du compresseur et/ou la puissance du compresseur en fonction du réfrigérant et en fonction d'un signal de température du capteur de température (24).

4. Installation de climatisation selon l'une quelconque des revendications 1 à 3,
**caractérisée en ce que**
l'on prévoit au niveau du compresseur (12, 112, 212) en particulier du côté aspiration, un capteur de pression (30) et **en ce que** l'appareil de commande (20) est prévu pour influencer la pression du compresseur et/ou la puissance du compresseur en fonction du réfrigérant et en fonction d'un signal de pression du capteur de pression (30).

5. Installation de climatisation selon l'une quelconque des revendications 1 à 4,
**caractérisée en ce que**
l'appareil de commande (20) est connecté à un dispositif de refroidissement (32) monté au niveau du condenseur (14), et est prévu pour commander le dispositif de refroidissement (32) en fonction du réfrigérant ou du réfrigérant et d'une température au niveau de l'évaporateur (18) et/ou d'une pression au niveau du compresseur (12, 112, 212).

6. Installation de climatisation selon l'une quelconque des revendications 1 à 5,
**caractérisée en ce que**
le dispositif d'expansion (16) présente un tube capillaire interchangeable (38) qui est adapté au réfrigérant.

7. Installation de climatisation selon l'une quelconque des revendications 1 à 6,
**caractérisée en ce que**
l'appareil de commande (20) présente au moins deux courbes caractéristiques différentes (40a, 40b) ou champs caractéristiques (42a, 42b) différents ou algorithmes de calcul différents pour une commande du compresseur (12, 112), et/ou d'un ventilateur (32) pour le condenseur (14) en fonction du réfrigérant et/ou d'une pression au niveau du compresseur (12, 112) et/ou d'une température au niveau de l'évaporateur (18).

8. Installation de climatisation selon l'une quelconque des revendications 1 à 7,
**caractérisée en ce que**
l'appareil de commande (20) est prévu de telle sorte qu'il puisse détecter un réfrigérant introduit dans un circuit de refroidissement à l'aide de corrélations mémorisées d'une pression au niveau du compresseur (12, 112, 212) et d'une température au niveau de l'évaporateur (18), en particulier en tenant compte d'autres paramètres tels qu'une température ambiante.

9. Installation de climatisation selon l'une quelconque des revendications 1 à 8,
**caractérisée en ce que**
le compresseur (12, 112, 212) présente une course ajustable et **en ce que** l'appareil de commande (20) est prévu pour ajuster la course du compresseur.

10. Installation de climatisation selon l'une quelconque des revendications 1 à 9,
**caractérisée en ce**
**qu'**un accumulateur (26) est prévu pour séparer le réfrigérant liquide du réfrigérant gazeux.

11. Installation de climatisation selon l'une quelconque des revendications 1 à 10,
**caractérisée en ce que**
l'appareil de commande (20) est connecté à une soupape de régulation de pression (36) ajustable montée sur le compresseur (12, 112, 212) qui est prévue pour influencer une température cible au niveau de l'évaporateur (18).

12. Installation de climatisation selon l'une quelconque des revendications 1 à 11,
**caractérisée en ce que**
l'on dispose un échangeur de chaleur (34) entre un raccord de sortie du condenseur (14) et un raccord d'entrée du compresseur (12, 112, 212).

13. Procédé pour faire fonctionner une installation de climatisation selon l'une quelconque des revendications 1 à 12,
**caractérisé en ce que**
dans un état de repos de l'installation de climatisation, une pression de repos d'un réfrigérant et une température de repos du réfrigérant et/ou une température ambiante sont déterminées.

14. Procédé selon la revendication 13,
**caractérisé en ce que**
dans un état de fonctionnement de l'installation de climatisation, une pression de fonctionnement d'un réfrigérant et une température de fonctionnement du réfrigérant et/ou une température ambiante sont déterminées.

15. Procédé selon la revendication 14,
**caractérisé en ce que**
dans l'état de fonctionnement de l'installation de climatisation, une puissance de refroidissement d'un dispositif de refroidissement (32), qui est prévu pour refroidir un condenseur (14), est ajustée par un appareil de commande (20) et la pression de fonctionnement du réfrigérant est déterminée en fonction de la puissance de refroidissement ajustée.

16. Procédé selon la revendication 15,
**caractérisé en ce**
**qu'**un dispositif de ventilation pour l'évacuation d'une puissance de refroidissement fournie par un évaporateur (18) est ajusté par l'appareil de commande (20) à un débit massique d'air, notamment minimal, et la pression de fonctionnement du réfrigérant est déterminée en fonction du débit massique d'air ajusté.

17. Procédé selon l'une quelconque des revendications 14 à 16,
**caractérisé en ce que**
la pression de repos du réfrigérant, la pression de fonctionnement du réfrigérant déterminée notamment en fonction de la puissance de refroidissement d'un dispositif de refroidissement (32) et/ou en fonction du débit massique d'air du dispositif de ventilation, la température de fonctionnement du réfrigérant et/ou la température ambiante sont fournies au niveau de l'appareil de commande (20), afin de déterminer au moins une courbe caractéristique du réfrigérant, en particulier une courbe de pression de vapeur du réfrigérant.

18. Procédé selon la revendication 17,
**caractérisé en ce que**
l'appareil de commande (20) effectue un ajustement d'une pression d'aspiration et/ou d'une température de l'évaporateur en influençant une puissance d'un compresseur (12, 112, 212), en particulier en influençant une durée d'enclenchement du compresseur (12, 112, 212), ou en commandant une soupape de régulation de pression (36) associée au compresseur (2, 112, 212), en fonction de la courbe caractéristique du réfrigérant déterminée.
